# EUROPÄISCHE PATENTSCHRIFT

(11) **EP 3 510 694 B1**
(45) Veröffentlichungstag und Bekanntmachung des Hinweises auf die Patenterteilung: **11.11.2020**
(21) Anmeldenummer: 17764369.9
(22) Anmeldetag: 05.09.2017
(51) Int. Cl.: H02K 21/22, H02K 1/18, H02K 7/08, H02K 7/116, E05F 15/697, H02K 5/16

(54) **ANTRIEBSVORRICHTUNG FÜR EINEN FENSTERHEBER, MIT EINEM LAGERELEMENT ZUM FIXIEREN EINES STATORS IN EINEM GEHÄUSE**
DRIVE DEVICE FOR A WINDOW LIFT, HAVING A BEARING ELEMENT FOR FIXING A STATOR IN A HOUSING
DISPOSITIF D'ENTRAÎNEMENT POUR UN LÈVE-VITRE, POURVU D'UN ÉLÉMENT PALIER DESTINÉ À LA FIXATION D'UN STATOR DANS UN CARTER

(30) Priorität: 06.09.2016 DE 102016216888
(43) Veröffentlichungstag der Anmeldung: 17.07.2019
(73) Patentinhaber: Brose Fahrzeugteile SE & Co. Kommanditgesellschaft, Würzburg, 97076 Würzburg (DE)
(72) Erfinder: LANGE, Gabriele, 96364 Marktrodach (DE)
(74) Vertreter: FDST Patentanwälte
(86) Internationale Anmeldenummer: PCT/EP2017/072147
(87) Internationale Veröffentlichungsnummer: WO 2018/046459

(56) Entgegenhaltungen:
- WO-A2-2014/139727
- DE-A1- 10 310 186
- DE-A1-102004 044 863
- DE-B3-102006 047 883
- GB-A- 1 393 705
- JP-A- H1 179 627
- JP-A- 2010 093 943
- US-A- 3 455 174
- US-A- 4 428 250
- US-A1- 2009 039 725

## Beschreibung

Die Erfindung betrifft eine Antriebsvorrichtung zum Verstellen eines Abdeckelements eines Fahrzeugs, insbesondere für eine Fensterhebereinrichtung, nach dem Oberbegriff des Anspruchs 1.

Eine derartige Antriebsvorrichtung umfasst ein Abtriebselement zum Verstellen des Abdeckelements und eine Motoreinheit, die einen Elektromotor mit einem Stator, einem Rotor und einer mit dem Rotor verbundenen, um eine Wellenachse drehbaren Antriebswelle zum Antreiben des Abtriebselements aufweist. Die Motoreinheit ist zumindest teilweise in einem Antriebsgehäuse der Antriebsvorrichtung eingefasst.

Die Antriebsvorrichtung ist vorteilhafterweise zum Verstellen eines Abdeckelements eines Fahrzeugs, insbesondere für eine Fensterhebereinrichtung einsetzbar. Das Abdeckelement kann eine Fensterscheibe, ein Schiebedach, eine Laderaumabdeckung, eine Heckklappe, ein Sonnenrollo oder auch eine Fahrzeugtür zum Abdecken einer Öffnung oder dergleichen in einem Fahrzeug sein.

Bei einem Fensterheber können beispielsweise an einem Aggregateträger eines Türmoduls ein oder mehrere Führungsschienen angeordnet sein, an denen je ein mit einer Fensterscheibe gekoppelter Mitnehmer geführt ist. Der Mitnehmer ist über ein biegeschlaffes, zur Übertragung von (ausschließlich) Zugkräften ausgelegtes Zugelement (z.B. ein Zugseil) mit der Antriebsvorrichtung gekoppelt, wobei das Zugelement derart an einem Abtriebselement in Form einer Seiltrommel angeordnet ist, dass sich bei einer Drehbewegung der Seiltrommel das Zugelement mit einem Ende auf die Seiltrommel aufwickelt und mit einem anderen Ende von der Seiltrommel abwickelt. Es kommt somit zu einem Verschieben einer durch das Zugseil gebildeten Seilschlaufe und dementsprechend zu einem Bewegen des Mitnehmers entlang der jeweils zugeordneten Führungsschiene. Angetrieben durch die Antriebsvorrichtung kann somit die Fensterscheibe verstellt werden, beispielsweise um eine Fensteröffnung an einer Fahrzeugseitentür freizugeben oder zu schließen.

Bei einem aus der DE 10 2004 044 863 A1 bekannten Antrieb für eine Verstelleinrichtung in einem Kraftfahrzeug ist eine Seiltrommel auf einem Lagerdom eines Antriebsgehäuses angeordnet, wobei das Antriebsgehäuse über ein Befestigungselement in Form einer Schraube mit einem Trägerelement in Form eines Aggregateträgers verbunden ist.

Eine Antriebsvorrichtung für einen Fensterheber, die beispielsweise an einem Trägerelement in Form eines Aggregateträgers eines Türmoduls an einer Fahrzeugseitentür montiert werden soll und somit innerhalb einer Fahrzeugseitentür einzufassen ist, soll vorteilhafte Betriebseigenschaften, insbesondere ein laufruhiges Verhalten mit geringer Schwingungsanregung an dem Trägerelement aufweisen und soll zudem den zur Verfügung stehenden Bauraum effizient ausnutzen. Es besteht hierbei ein Bedürfnis danach, die Antriebsvorrichtung kompakt auszugestalten, wobei die Antriebsvorrichtung jedoch ein hinreichendes Drehmoment zur Verfügung stellen muss, um ein zuverlässiges Verstellen des zu verstellenden Verstellteils, beispielsweise der Fensterscheibe, zu gewährleisten, gegebenenfalls auch bei Schwergängigkeiten im System, beispielsweise zum Einlaufen in eine Dichtung oder dergleichen. Generell hängt das zur Verfügung stehende Drehmoment hierbei auch von der Baugröße des Elektromotors ab. So kann ein Elektromotor bei größerem Rotordurchmesser und/oder bei größerer Rotorlänge ein größeres Drehmoment zur Verfügung stellen.

Aus JP 2010 093 943 A ist eine Antriebsvorrichtung für eine Lenkeinrichtung bekannt. Aus DE 10 2006 047 883 B3 ist ein elektronisch kommutierter Elektromotor für ein Elektrohandwerkzeug bekannt. In JP H11 79627 A ist eine Antriebsvorrichtung für einen Haushaltslift mit einem Elektromotor und einem harmonischen Getriebe (auch: "Spannungswellengetriebe") beschrieben. In US 2009 039 725 A1 ist eine Servo-Einheit mit einem bürstenlosen Elektromotor und eine nachgelagerten Getriebe beschrieben. WO 2014 139 727 A2 beschreibt einen Antrieb für eine Transportvorrichtung, wie ein Transportband, wobei der Antrieb einen Außenläufermotor, umfassend einen Stator und einen Rotor, und ein Getriebe, umfassend eine Welle und ein Eintriebszahnrad, umfasst.

Aufgabe der vorliegenden Erfindung ist es, eine Antriebsvorrichtung zur Verfügung zu stellen, die ein günstiges Betriebsverhalten aufweisen, ein hinreichendes Drehmoment zur Verfügung stellen und kompakt aufgebaut sein kann.

Diese Aufgabe wird durch einen Gegenstand mit den Merkmalen des Anspruchs 1 gelöst.

Demnach ist der Stator über ein Lagerelement mit einem feststehenden Gehäuseabschnitt des Antriebsgehäuses verbunden, wobei das Lagerelement eine Lageröffnung aufweist, in der die Antriebswelle drehbar zu dem Stator gelagert ist.

Das Lagerelement wird somit in zweifacher Funktion verwendet. So dient das Lagerelement einerseits zum Festlegen des Stators innerhalb des Antriebsgehäuses der Antriebsvorrichtung. Dies ermöglicht insbesondere, den Elektromotor als Außenläufermotor mit zentral innen gelegenem, feststehendem Stator und außen um den Stator umlaufendem Rotor auszubilden, wie nachfolgend noch erläutert werden soll. In weiterer Funktion dient das Lagerelement zudem zum Lagern der Antriebswelle, wozu das Lagerelement eine Lageröffnung aufweist, in der die Antriebswelle drehbar zu dem Stator gelagert ist. Das Lagerelement stellt somit ein Lager für die Antriebswelle zum drehbaren Lagern gegenüber dem Stator bereit.

Das Lagerelement kann beispielsweise aus Kunststoff gefertigt sein. Das Lagerelement kann insbesondere vorteilhafte Gleiteigenschaften zum Lagern der Antriebswelle aufweisen.

In einer Ausgestaltung weist das Lagerelement einen ersten Schaftabschnitt auf, der fest mit einem Statorkörper des Stators verbunden ist. Ein axial zu dem ersten Schaftabschnitt versetzter, zweiter Schaftabschnitt ist demgegenüber fest mit dem Gehäuseabschnitt verbunden, sodass das Lagerelement eine feste Verbindung des Stators mit dem Gehäuseabschnitt schafft.

In einer Ausgestaltung ist der Rotor als radial zur Wellenachse außerhalb des Stators umlaufender Außenläufer ausgebildet. Der Elektromotor der Motoreinheit ist somit als Außenläufermotor verwirklicht. Bei einem solchen Außenläufermotor ist der feststehende Stator radial innerhalb des umlaufenden Rotors angeordnet. Der Rotor dreht sich somit um den Stator, was ermöglicht, den Rotor mit einem vergleichsweise großen Durchmesser auszubilden, was ein günstiges Drehmomentverhalten des Elektromotors bewirken kann.

Generell steigt das Drehmoment des Elektromotors mit größerem Durchmesser. Wird der Durchmesser des Rotors somit vergrößert, kann dies - bei gleichem Drehmoment - dazu verwendet werden, die Baugröße des Elektromotors in anderer Richtung, insbesondere in axialer Richtung, zu verringern, sodass die axiale Länge des Elektromotors und auch der Antriebswelle verkleinert werden kann.

Der Elektromotor kann insbesondere als bürstenloser Gleichstrommotor ausgebildet sein. Bei einem solchen bürstenlosen Gleichstrommotor weist der Stator üblicherweise an einem Statorkörper eine Mehrzahl von Polzähnen auf, an denen eine Mehrzahl von Statorwicklungen angeordnet ist. Beispielsweise können solche Statorwicklungen als konzentrierte Wicklungen an den Polzähnen gewickelt sein. Denkbar und möglich ist aber auch, sogenannte Wellenwicklungen zu verwenden. An jedem Polzahn können eine oder mehrere Wicklungen angeordnet sein, wobei jede Wicklung aus mehreren Windungen besteht, die durch einen um den zugeordneten Polzahn gewickelten Wickeldraht gebildet sind. Im Betrieb werden die Statorwicklungen in elektronisch kommutierter Weise bestromt derart, dass beispielsweise drei Stromphasen an die Wicklungen angelegt werden, sodass sich am Stator ein umlaufendes Drehfeld ergibt.

Bei einem bürstenlosen Gleichstrommotor weist der Rotor eine Magnetanordnung mit einer Mehrzahl von Permanentmagnetpolen auf. Die Magnetanordnung kann beispielsweise durch diskrete Permanentmagnete gebildet sein. Denkbar und möglich ist aber auch, einen Ringmagneten zu verwenden, der eine Mehrzahl von umfänglich um die Wellenachse zueinander versetzten, alternierend magnetisierten Magnetpolen aufweist. Beispielsweise können gebundene oder gesinterte Neodym-Magnetanordnungen eingesetzt werden. Denkbar und möglich ist aber auch eine Magnetanordnung unter Verwendung von Cer (auch Cerium genannt, Elementsymbol Ce) als (permanent-) magnetisches Material. Aufgrund der Magnetanordnung besteht an dem Rotor ein magnetisches Erregerfeld, das im Betrieb des Elektromotors mit dem umlaufenden Drehfeld des Stators zur Drehmomenterzeugung am Rotor zusammenwirkt.

In einer beispielhaften Ausgestaltung kann der Stator neun Polzähne mit daran angeordneten Statorwicklungen aufweisen. Der Rotor kann beispielsweise eine Magnetanordnung mit sechs (Permanent-) Magnetpolen (drei Magnetpolpaaren) aufweisen. Durch die Verwendung eines bürstenlosen Gleichstrommotors kann die Bauform der Antriebsvorrichtung, bei günstigem Betriebs- und Drehmomentverhalten, weiter reduziert werden.

In einer Ausgestaltung weist der Rotor einen Poltopf auf, der beispielsweise aus einem ferromagnetischen Material gefertigt ist und somit einen magnetischen Rückschluss für die an dem Rotor angeordnete Magnetanordnung bereitstellen kann. Der Rotor ist mit der Antriebswelle verbunden und trägt die Magnetanordnung, wobei die Magnetanordnung beispielsweise als Ringmagnet innerhalb des Poltopfs angeordnet ist.

Das Abtriebselement ist mit einem Antriebsrad wirkverbunden, das mit der Antriebswelle in Verzahnungseingriff steht. Die Antriebswelle trägt hierbei eine Antriebsschnecke, die eine Schneckenverzahnung aufweist, die mit einer Außenverzahnung des Antriebsrads in Verzahnungseingriff steht. Durch Verdrehen der Antriebswelle und damit einhergehend durch Verdrehen der Antriebsschnecke kann somit das Antriebsrad verdreht und darüber das Abtriebselement angetrieben werden.

Der Rotor, insbesondere der Poltopf des Rotors, ist hierbei vorzugsweise auf einer von der Antriebsschnecke abgewandten Seite des Stators mit der Antriebswelle verbunden. Der Poltopf des außen um den Stator umlaufenden Rotors umgreift den Stator somit an einer von der Antriebsschnecke abgewandten Seite, was ermöglicht, den Stator über das Lagerelement an einer der Antriebsschnecke zugewandten Seite mit dem Antriebsgehäuse zu verbinden und die Antriebswelle in räumlich naher Lagebeziehung zu der Antriebsschnecke über das Lagerelement zu lagern.

Das Antriebsgehäuse weist erfindungsgemäß ein Schneckengehäuse auf, in dem die Antriebsschnecke eingefasst ist. Das Schneckengehäuse ist vorzugsweise zylindrisch mit entlang seiner axialen Länge im Wesentlichen konstantem Durchmesser geformt, sodass die Antriebsschnecke in dem Schneckengehäuse drehbar aufgenommen ist.

Das Schneckengehäuse bildet den Gehäuseabschnitt aus, mit dem das Lagerelement verbunden ist. Hierzu greift das Lagerelement in das Schneckengehäuse ein und ist fest mit dem Schneckengehäuse verbunden, indem das Lagerelement in das Schneckengehäuse eingepresst ist. Zusätzlich oder alternativ ist das Lagerelement mit dem Schneckengehäuse verklebt oder verschweißt.

Das Lagerelement ist zudem fest mit dem Statorkörper des Stators verbunden. Hierzu kann das Lagerelement mit dem Statorkörper verpresst, verschweißt, verklebt oder auf sonstige Weise an dem Statorkörper fixiert sein.

Soll das Lagerelement mit dem Schneckengehäuse verpresst werden, so wird das Lagerelement unter Presspassung in das Schneckengehäuse eingepresst. Um die axiale Lage des Lagerelements in dem Schneckengehäuse zu definieren, kann hierbei an dem Schneckengehäuse ein Absatz vorgesehen sein, mit dem das Lagerelement, beispielsweise über einen geeigneten Anschlag, beim Einstecken (Einpressen) in das Schneckengehäuse in Anlage gelangt, sodass das Lagerelement in verbundenem Zustand axial an dem Schneckengehäuse abgestützt ist.

Auch bei Verbindung des Lagerelements auf andere Weise mit dem Schneckengehäuse kann das Lagerelement über einen Absatz an dem Schneckengehäuse eine definierte Lage zu dem Schneckengehäuse einnehmen.

Das Lagerelement dient zum Lagern der Antriebswelle und kann axial vergleichsweise lang gezogen sein, sodass über das Lagerelement eine günstige Lagerung für die Antriebswelle in dem Antriebsgehäuse geschaffen wird. Zusätzlich kann die Antriebswelle über ein axial zu dem Lagerelement versetztes, zweites Lagerelement in dem Schneckengehäuse gelagert sein, wobei dieses weitere, zweite Lagerelement beispielsweise an einem dem Stator abgewandten Ende der Antriebswelle angeordnet ist und die Antriebswelle somit an einem von dem Stator abliegenden Ende gegenüber dem Schneckengehäuse lagert. Das weitere, zweite Lagerelement kann hierbei buchsenförmig ausgestaltet sein und den gleichen Außendurchmesser wie der in das Schneckengehäuse eingreifende Schaftabschnitt des ersten Lagerelements aufweisen, sodass sowohl das erste Lagerelement als auch das weitere, zweite Lagerelement beispielsweise einen Presssitz in dem Schneckengehäuse einnehmen können. Der gleiche Außendurchmesser des ersten Lagerelements und des weiteren, zweiten Lagerelements bei über die Länge des Schneckengehäuses konstantem Innendurchmesser kann Vorteile in den Toleranzbedingungen bringen, weil die Lagerelemente in ihrem Sitz vergleichbare Toleranzen erfahren.

Auch das weitere, zweite Lagerelemente kann an einem weiteren, zweiten Absatz des Schneckengehäuses axial abgestürzt sein. Auch das weitere Lagerelement nimmt somit eine definierte axiale Lage in dem Schneckengehäuse ein.

Zum axialen Abstützen der Antriebswelle kann in dem Schneckengehäuse beispielsweise ein Anlaufelement vorgesehen sein, an dem die Antriebswelle an einem (von dem Stator abgewandten) Ende axial abgestützt ist. Das Anlaufelement liegt beispielsweise in einem Endabschnitt des Schneckengehäuses ein, der einen verringerten Innendurchmesser gegenüber dem die Antriebsschnecke aufnehmenden Abschnitt des Schneckengehäuses aufweisen kann.

An ihrem das erste Lagerelement durchgreifenden Ende kann die Antriebswelle demgegenüber an einem Deckel eines den Rotor und den Stator einfassenden Motortopfs axial abgestützt sein, wobei hierzu am Deckel eine Anlaufstelle ausgebildet sein kann, die ein Axiallager für die Antriebswelle schafft.

In einer Ausgestaltung kann die Wellenachse der Antriebswelle unter einem schrägen Winkel zu einer Drehachse, um die das Abtriebselement drehbar ist, ausgerichtet sein. Bei einer herkömmlichen Antriebsvorrichtung für einen Fensterheber, wie sie beispielsweise aus der DE 10 2004 044 863 A1 bekannt ist, ist die Wellenachse der Antriebswelle quer zur Drehachse des Abtriebselements (in Form einer Seiltrommel) erstreckt. Diese Anordnung der Antriebswelle zum Abtriebselement beschränkt die Möglichkeiten, die Motoreinheit der Antriebsvorrichtung an einem Trägerelement zu platzieren, sodass hierdurch der zur Verfügung stehende Bauraum wesentlich vorgegeben ist. Abweichend von diesem Stand der Technik kann vorgesehen sein, die Wellenachse der Antriebswelle unter einem schrägen Winkel zu der Drehachse des Abtriebselements auszurichten. Während herkömmlich die Wellenachse einen Winkel von 90° zur Drehachse des Abtriebselements aufweist, erstreckt sich nunmehr die Wellenachse der Antriebswelle unter einem schrägen Winkel, also unser einen Winkel <90°, beispielsweise einem Winkel in einem Bereich zwischen 85° und 65°, beispielsweise zwischen 80° und 70°, zu der Drehachse. Dies stellt einen zusätzlichen Freiheitsgrad zur Verfügung, weil dies ermöglicht, die Motoreinheit in ihrer Lage gegenüber anderen Komponenten der Antriebsvorrichtung anzupassen, sodass ein zur Verfügung stehender Bauraum effizient ausgenutzt werden kann.

Dies kann auch ermöglichen, den Durchmesser des Rotors (weiter) zu vergrößern. Durch Vergrößerung des Durchmessers kann die axiale Länge der Motoreinheit und auch die axiale Länge der Antriebswelle bei gleichem zur Verfügung stehenden Drehmoment verkleinert werden, was zusätzlich zu einer kompakten Bauform der Antriebsvorrichtung beitragen kann.

Durch Schrägstellung der Wellenachse der Antriebswelle gegenüber der Drehachse des Abtriebselements , die vorzugsweise auch der Drehachse des Antriebsrads entspricht, kann auch die Antriebsschnecke schräg gegenüber der Drehachse und damit schräg gegenüber dem Antriebsrad erstreckt sein. In einer vorteilhaften Ausgestaltung kann hierbei die Schrägstellung der Wellenachse gerade so gewählt sein, dass der Steigungswinkel der Schneckenverzahnung dem Winkel zwischen der Wellenachse und einer quer (unter einem Winkel von 90°) zur Drehachse erstreckten Querachse entspricht. Dies ermöglicht, die Verzahnung des Antriebsrads als Geradverzahnung auszubilden, was eine günstige Bauform des Antriebsrads bei einfacher, kostengünstiger Herstellung ermöglicht.

Unter der Steigung einer Schneckenverzahnung wird generell der axiale Hub pro umfänglicher Länge verstanden. Die Steigung kann beispielsweise bestimmt werden anhand des axialen Hubs pro Umdrehung, dividiert durch die Umfangslänge pro Umdrehung (die sich aus der Länge des Wegs ergibt, den man erhält, wenn man die Schnecke über eine Umdrehung linear abrollt). Der Steigungswinkel ergibt sich unmittelbar aus der Steigung.

Das Abtriebselement kann z.B. eine um eine Drehachse drehbare Seiltrommel zum Verstellen eines mit dem Abdeckelement wirkverbundenen Zugelements sein, die an einer ersten Seite eines Trägerelements angeordnet ist, wobei das Antriebsgehäuse auf einer von der ersten Seite abgewandten, zweiten Seite des Trägerelements angeordnet ist. Durch Verdrehen der Seiltrommeln kann das Zugelement bewegt werden, um dadurch das zu verstellende Abdeckelement, beispielsweise eine Fensterscheibe, zu bewegen. Die Seiltrommel ist hierbei üblicherweise im Nassraum zum Beispiel einer Fahrzeugtür angeordnet, während die Motoreinheit auf der anderen Seite des Trägerelements in einem Trockenraum befestigt ist. Das Trägerelement stellt in diesem Fall eine Nass-Trockenraum-Trennung zur Verfügung.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Antriebsvorrichtung;
- Fig. 1B: die Explosionsansicht gemäß Fig. 1A, aus anderer Perspektive;
- Fig. 2: eine Ansicht eines Seilausgangsgehäuses vor Ansetzen an ein Trägerelement;
- Fig. 3: eine andere Ansicht des Seilausgangsgehäuses vor Ansetzen an das Trägerelement;
- Fig. 4A: eine Draufsicht auf das Trägerelement, an einer dem Seilausgangsgehäuse zugewandten, ersten Seite;
- Fig. 4B: eine Schnittansicht entlang der Linie A-A gemäß Fig. 4A;
- Fig. 5: eine perspektivische Ansicht des Trägerelements, an einer einem Antriebsgehäuse zugewandten, zweiten Seite;
- Fig. 6: eine gesonderte, perspektivische Ansicht des Antriebsgehäuses;
- Fig. 7A: eine Draufsicht auf das Antriebsgehäuse;
- Fig. 7B: eine Schnittansicht entlang der Linie B-B gemäß Fig. 7A;
- Fig. 8: eine Seitenansicht der Antriebsvorrichtung, bei herkömmlicher Ausrichtung einer Wellenachse einer Antriebswelle;
- Fig. 9: eine Seitenansicht der Antriebsvorrichtung, mit schräg ausgerichteter Wellenachse, gemäß einer ersten Variante;
- Fig. 10: eine Seitenansicht der Antriebsvorrichtung, mit schräg ausgerichteter Wellenachse, gemäß einer zweiten Variante;
- Fig. 11: eine ausschnittsweise vergrößerte Darstellung der Anordnung gemäß Fig. 10;
- Fig. 12: eine schematische Ansicht einer Verstelleinrichtung eines Fahrzeugs in Form eines Fensterhebers;
- Fig. 13: eine Ansicht eines Ausführungsbeispiels einer Motoreinheit;
- Fig. 14A: eine Ansicht der Motoreinheit, ohne ein eine Antriebswelle endseitig lagerndes Lagerelement;
- Fig. 14B: eine andere perspektivische Ansicht der Anordnung gemäß Fig. 14A;
- Fig. 15A: eine Ansicht der Motoreinheit ohne Rotor;
- Fig. 15B: eine andere perspektivische Ansicht der Anordnung gemäß Fig. 15A;
- Fig. 16: eine teilweise geschnittene Ansicht der Motoreinheit;
- Fig. 17: eine Ansicht der Motoreinheit, ohne am Stator angeordnete Statorwicklungen;
- Fig. 18: eine Ansicht der in einem Lagerelement gelagerten Antriebswelle;
- Fig. 19A: eine Ansicht des die Antriebswelle lagernden Lagerelements;
- Fig. 19B: eine andere Ansicht des Lagerelements;
- Fig. 20: eine teilweise geschnittene Ansicht der Antriebsvorrichtung, im Bereich der Motoreinheit;
- Fig. 21: eine schematische Ansicht des Elektromotors der Motoreinheit, mit dreiphasiger Bestromung der an dem Stator angeordneten Statorwicklungen;
- Fig. 22: eine Ansicht eines Ausführungsbeispiels einer Motoreinheit;
- Fig. 23: eine gesonderte Ansicht der Antriebswelle zusammen mit die Antriebswelle lagernden Lagerelementen;
- Fig. 24: eine gesonderte Ansicht der Lagerelemente; und
- Fig. 25: eine Schnittansicht durch die Motoreinheit im Antriebsgehäuse.

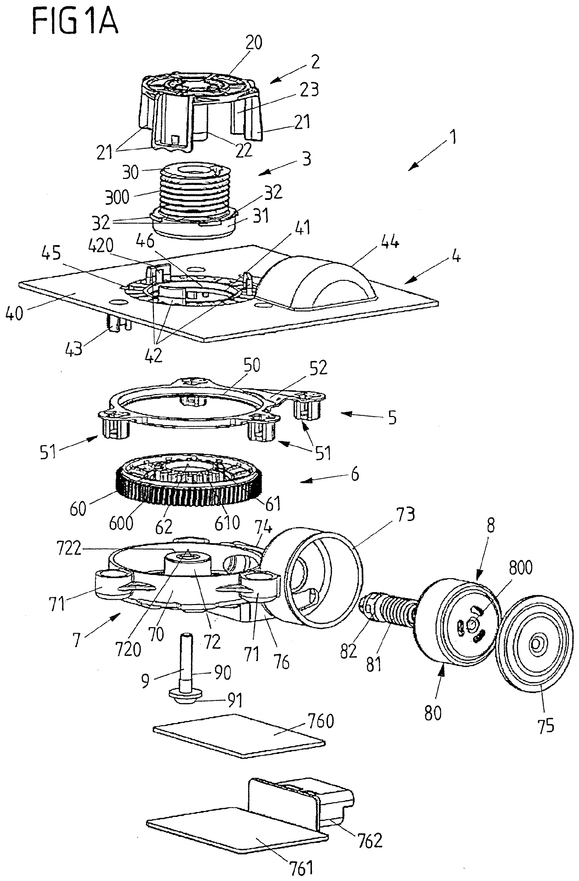

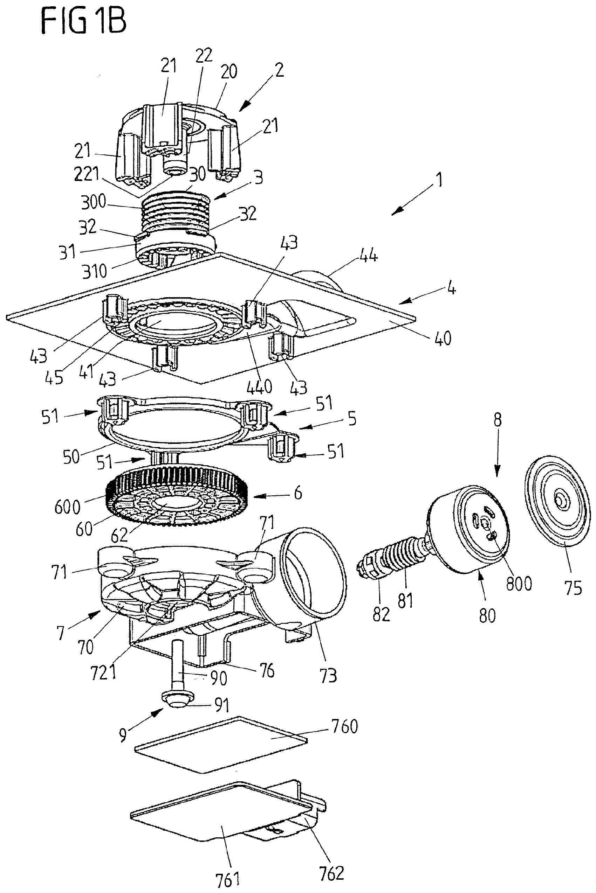

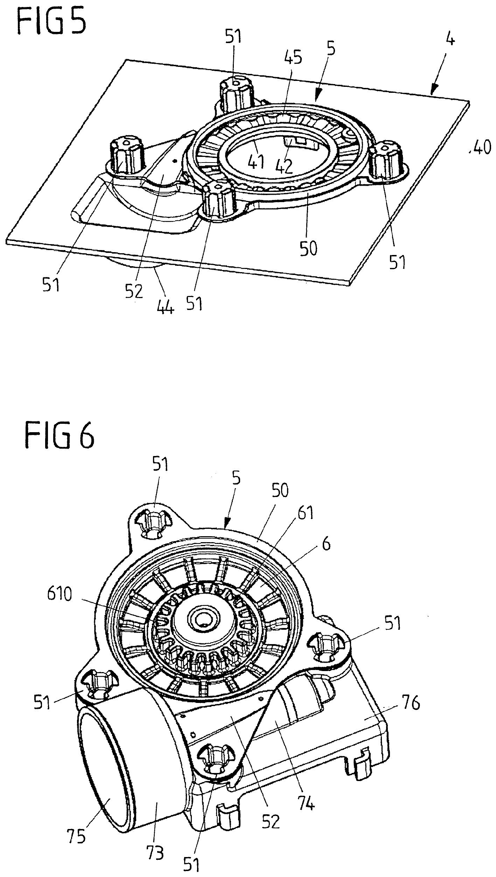

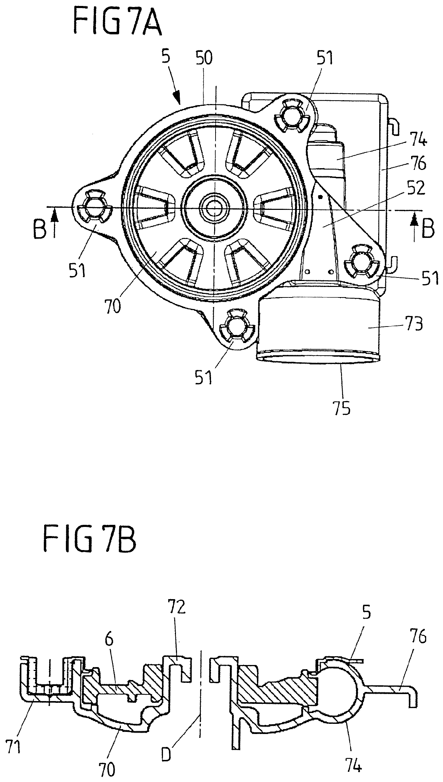

Fig. 1A, 1B bis 7A, 7B zeigen ein Ausführungsbeispiel einer Antriebsvorrichtung 1, die beispielsweise als Antrieb in einer Verstelleinrichtung zum Verstellen einer Fensterscheibe beispielsweise einer Fahrzeugseitentür Verwendung finden kann.

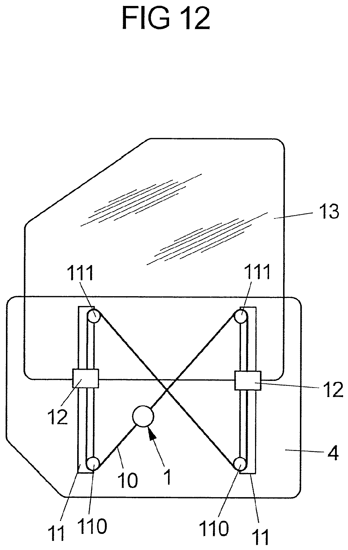

Eine solche Verstelleinrichtung in Form eines Fensterhebers, beispielhaft dargestellt in Fig. 12, weist beispielsweise ein Paar von Führungsschienen 11 auf, an denen jeweils ein Mitnehmer 12, der mit einer Fensterscheibe 13 gekoppelt ist, verstellbar ist. Jeder Mitnehmer 12 ist über ein Zugseil 10, das zur Übertragung von (ausschließlich) Zugkräften ausgebildet ist, mit einer Antriebsvorrichtung 1 gekoppelt, wobei das Zugseil 10 eine geschlossene Seilschlaufe ausbildet und dazu mit seinen Enden mit einem Abtriebselement in Form einer Seiltrommel 3 (siehe zum Beispiel Fig. 1A und 1B) der Antriebsvorrichtung 1 verbunden ist. Das Zugseil 10 erstreckt sich von der Antriebsvorrichtung 1 um Umlenkrollen 110 an den unteren Enden der Führungsschienen 11 hin zu den Mitnehmern 12 und von den Mitnehmern 12 um Umlenkrollen 111 an den oberen Enden der Führungsschienen 11 zurück zur Antriebsvorrichtung 10.

Im Betrieb treibt eine Motoreinheit der Antriebsvorrichtung 1 die Seiltrommel 3 derart an, dass das Zugseil 10 mit einem Ende auf die Seiltrommel 3 aufgewickelt und mit dem anderen Ende von der Seiltrommel 3 abgewickelt wird. Hierdurch verschiebt sich die durch das Zugseil 10 gebildete Seilschlaufe ohne Änderung der frei erstreckten Seillänge, was dazu führt, dass die Mitnehmer 12 an den Führungsschienen 11 gleichgerichtet bewegt und dadurch die Fensterscheibe 13 entlang der Führungsschienen 11 verstellt wird.

Der Fensterheber ist bei dem Ausführungsbeispiel gemäß Fig. 12 an einem Aggregateträger 4 eines Türmoduls angeordnet. Der Aggregateträger 4 kann beispielsweise an einem Türinnenblech einer Fahrzeugtür festzulegen sein und stellt eine vormontierte Einheit dar, die vormontiert mit an dem Aggregateträger 4 angeordnetem Fensterheber an der Fahrzeugtür montiert werden kann.

Die Antriebsvorrichtung 1 des Ausführungsbeispiels gemäß Fig. 1A, 1B bis 7A, 7B ist an einem Flächenabschnitt 40 eines z.B. durch einen Aggregateträger eines Türmoduls verwirklichten Trägerelements 4 angeordnet und weist ein an einer ersten Seite des Trägerelements 4 angeordnetes Seilausgangsgehäuse 2 und ein an einer von der ersten Seite abgewandten, zweiten Seite des Trägerelements 4 angeordnetes Antriebsgehäuse 7 auf. Das Seilausgangsgehäuse 2 dient dazu, die Seiltrommel 3 an dem Trägerelement 4 zu lagern, während das Antriebsgehäuse 7 unter anderem ein Antriebsrad 6 einfasst, das über eine Motoreinheit 8 angetrieben werden kann und mit der Seiltrommel 3 in Verbindung steht, sodass durch Verdrehen des Antriebsrads 6 die Seiltrommel 3 angetrieben werden kann.

Die Seiltrommel 3 an der ersten Seite des Trägerelements 4 ist, bei bestimmungsgemäßer Anordnung beispielsweise an einer Fahrzeugtür eines Fahrzeugs, in einem Nassraum der Fahrzeugtür angeordnet. Das Antriebsgehäuse 7 befindet sich demgegenüber im Trockenraum der Fahrzeugtür. Die Trennung zwischen Nassraum und Trockenraum wird durch das Trägerelement 4 hergestellt, und entsprechend ist die Schnittstelle zwischen dem Antriebsrad 6 und der Seiltrommel 3 feuchtigkeitsdicht abzudichten, sodass keine Feuchtigkeit von dem Nassraum in den Trockenraum gelangen kann.

Das Seilausgangsgehäuse 2 weist einen Boden 20, ein zentral von dem Boden 20 vorstehendes, zylindrisches Lagerelement 22 in Form eines Lagerdoms und radial zu dem Lagerelement 22 beabstandete Gehäuseabschnitte 21 in Form von parallel zu dem zylindrischen Lagerelement 22 erstreckten Gehäusestegen auf. An dem Lagerelement 22 ist die Seiltrommel 3 drehbar gelagert und dabei derart von dem Seilausgangsgehäuse 2 eingefasst, dass die Seiltrommel 3 an dem Trägerelement 4 gehalten ist.

Die Seiltrommel 3 weist einen Körper 30 und, an der umfänglichen Mantelfläche des Körpers 30, eine in den Körper 30 eingeformte Seilrille 300 zur Aufnahme des Zugseils 10 auf. Mit einem Hohlrad 31 ist die Seiltrommel 3 in eine Öffnung 41 des Trägerelements 4 eingesetzt und mit dem Antriebsrad 6 drehfest verbunden, sodass eine Drehbewegung des Antriebsrads 6 zu einer Drehbewegung der Seiltrommel 3 führt.

Das Antriebsgehäuse 7 ist unter Zwischenlage eines Dichtelements 5 an die andere, zweite Seite des Trägerelements 4 angesetzt und weist einen Gehäusetopf 70 mit einem zentral darin ausgebildeten Lagerelement 72 in Form eines zylindrischen Lagerdoms auf, das eine Öffnung 62 des Antriebsrads 6 durchgreift und das Antriebsrad 6 auf diese Weise drehbar lagert. An den Gehäusetopf 70 schließt ein Schneckengehäuse 74 an, in dem eine Antriebsschnecke 81 einliegt, die drehfest mit einer Antriebswelle 800 eines Elektromotors 80 der Motoreinheit 8 verbunden ist und über eine Schneckenverzahnung mit einer Außenverzahnung 600 eines Körpers 60 des Antriebsrads 6 in Verzahnungseingriff steht. Die Antriebswelle 800 ist über ein Lager 82 an ihrem dem Elektromotor 80 abgewandten Ende in dem Schneckengehäuse 74 gelagert. Der Elektromotor 80 liegt hierbei in einem Motortopf 73 des Antriebsgehäuses 7 ein, der über einen Gehäusedeckel 75 nach außen hin verschlossen ist.

Das Antriebsgehäuse 7 weist zudem ein Elektronikgehäuse 76 auf, in dem eine Platine 760 mit einer darauf angeordneten Steuerelektronik eingefasst ist. Das Elektronikgehäuse 76 ist nach außen hin über eine Gehäuseplatte 761 mit einem daran angeordneten Steckverbinder 762 zur elektrischen Anbindung der Elektronik der Platine 760 verschlossen.

Das Antriebsrad 6 weist, axial von dem Körper 60 vorstehend, ein Verbindungsrad 61 mit einer daran geformten Außenverzahnung 610 auf, das mit dem Hohlrad 31 der Seiltrommel 3 derart in Eingriff steht, dass eine Innenverzahnung 310 des Hohlrads 31 (siehe zum Beispiel Fig. 1B) in Verzahnungseingriff mit der Außenverzahnung 610 des Verbindungsrads 61 steht. Auf diese Weise sind das Antriebsrad 6 und die Seiltrommel 3 drehfest miteinander verbunden, sodass die Seiltrommel 3 durch Antreiben des Antriebsrads 6 an dem Trägerelement 4 verdrehbar ist.

Zur Montage der Antriebsvorrichtung 1 wird das Seilausgangsgehäuse 2 einerseits an das Trägerelement 4 und das Antriebsgehäuse 7 andererseits an das Trägerelement 4 angesetzt. Die Befestigung an dem Trägerelement 4 erfolgt dann dadurch, dass ein Befestigungselement 9 in Form eines Schraubelements in eine Eingriffsöffnung 721 unterseitig des Antriebsgehäuses 7 eingesetzt wird derart, dass sich das Befestigungselement 9 durch eine Öffnung 720 in dem Lagerelement 72 des Antriebsgehäuses 7 hindurch erstreckt und zentral in eine Öffnung 221 innerhalb des Lagerelements 22 des Seilausgangsgehäuses 2 eingreift. Über das Befestigungselement 9 werden das Seilausgangsgehäuse 2 und das Antriebsgehäuse 7 axial an den Lagerelementen 22, 72 zueinander verspannt und darüber an dem Trägerelement 4 festgelegt.

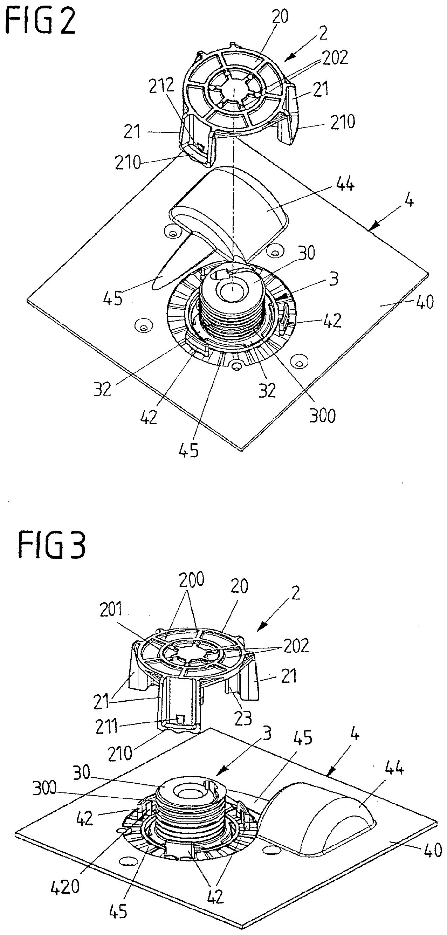

Zur Montage wird das Seilausgangsgehäuse 2 an die erste Seite des Trägerelements 4 angesetzt, sodass das Seilausgangsgehäuse 2 die Seiltrommel 3 einfasst und an dem Trägerelement 4 hält. Das Seilausgangsgehäuse 2 kommt hierbei mit seinen radial zum Lagerelement 22 beabstandeten Gehäuseabschnitten 21 über Fußabschnitte 210 in Anlage mit einem Anlagering 45, der eine Öffnung 41 in dem Trägerelement 4 umfänglich umgibt. An dem Anlagering 45 sind axial vorstehende Formschlusselemente 42 in Form von stegförmigen Zapfen ausgebildet, die bei Ansetzen des Seilausgangsgehäuses 2 an das Trägerelement 4 mit Formschlussöffnungen 212 (siehe Fig. 2) an den Fußabschnitten 210 der Gehäuseabschnitte 21 in Eingriff gelangen und auf diese Weise eine Drehsicherung um die durch das Lagerelement 22 definierte Drehachse D zwischen dem Seilausgangsgehäuse 2 und dem Trägerelement 4 schaffen.

Innenseitig der Formschlusselemente 42 sind Rastausnehmungen 420 geschaffen (siehe zum Beispiel Fig. 3), in die bei angesetztem Seilausgangsgehäuse 2 Rastelemente 211 in Form von nach außen vorstehenden Rastnasen an den Gehäuseabschnitten 21 eingreifen. Über diese Rastverbindung wird in einer Vormontagestellung das Seilausgangsgehäuse 2 zusammen mit der darin eingefassten Seiltrommel 3 an dem Trägerelement 4 gehalten, auch wenn das Antriebsgehäuse 7 noch nicht über das Befestigungselement 9 mit dem Seilausgangsgehäuse 2 verspannt ist. Die Rastverbindung vereinfacht somit die Montage und verhindert ein Abfallen des Seilausgangsgehäuses 2 bei noch nicht montiertem Antriebsgehäuse 7.

Die Seiltrommel 3 kommt, in der Vormontagestellung, über radial vorstehende Auflageelemente 32 am oberen Rand des Hohlrads 31 (siehe zum Beispiel Fig. 1A) mit einem Auflagering 46 innerhalb der Öffnung 41 des Trägerelements 4 in Auflage, sodass die Seiltrommel 3 in der Vormontagestellung nicht durch die Öffnung 41 hindurchrutschen kann und über das Seilausgangsgehäuse 2 an dem Trägerelement 4 gehalten ist.

Die Auflageelemente 32 dienen insbesondere zur Sicherung der Lage der Seiltrommel 3 an dem Trägerelement 4 in der Vormontagestellung. Nach vollständiger Montage der Antriebsvorrichtung 1 steht die Seiltrommel 3 über das Hohlrad 31 mit dem Antriebsrad 6 in Verbindung und ist axial zwischen dem Seilausgangsgehäuse 2 und dem Antriebsgehäuse 7 festgelegt.

An den Innenseiten der Gehäuseabschnitte 21 sind axial erstreckte und radial nach innen vorspringende Sicherungselemente 23 angeordnet, die der Seilrille 300 an der Mantelfläche des Körpers 30 zugewandt sind und vorzugsweise im Betrieb entlang dieser Mantelfläche gleiten. Über diese Sicherungselemente 23 wird sichergestellt, dass das in der Seilrille 300 aufgenommene Zugseil 10 nicht aus der Seilrille 300 herausspringen kann.

Das Antriebsgehäuse 7 wird an die andere, zweite Seite des Trägerelements 4 angesetzt derart, dass der Motortopf 73 in einer Ausformung 44 in dem Flächenabschnitt 40 und das Schneckengehäuse 74 in einer daran anschließenden Ausformung 440 in dem Flächenabschnitt 40 zu liegen kommt (siehe Fig. 1A, 1B und 2). Bei Ansetzen des Antriebsgehäuses 7 gelangen Befestigungseinrichtungen 71 in Form von Eingriffsbuchsen mit darin eingeformten Formschlussöffnungen 710 mit unterseitig von dem Trägerelement 4 vorstehenden Formschlusselementen 43 in Form von Zapfen in Eingriff. Dadurch, dass die Formschlussöffnungen 710 der Befestigungseinrichtungen 71 genauso wie die Formschlusselemente 43 in Form der Zapfen an dem Trägerelement 4 radial zu der durch das Lagerelement 72 des Antriebsgehäuses 7 geschaffenen Drehachse D beabstandet sind, wird durch diesen formschlüssigen Eingriff das Antriebsgehäuse drehfest an dem Trägerelement 4 festgelegt, sodass eine Drehsicherung für das Antriebsgehäuse 7 bereitgestellt wird.

An den Formschlusselementen 43 des Trägerelements 4 sind Eingriffsabschnitte 51 an einem Dichtring 50 des Dichtelements 5 angeordnet, sodass der formschlüssige Eingriff der Formschlusselemente 43 mit den Formschlussöffnungen 710 an den Befestigungseinrichtungen 71 unter Zwischenlage der Eingriffsabschnitte 51 erfolgt. Dies dient der akustischen Entkopplung.

An dem Dichtelement 5 ist ein gekrümmter Abschnitt 52 ausgebildet, der im Bereich der Ausformung 440 zur Aufnahme des Schneckengehäuses 74 zu liegen kommt. Der gekrümmte Abschnitt 52 bildet eine Zwischenlage zwischen dem Schneckengehäuse 74 und dem Trägerelement 4, sodass auch darüber eine akustische Entkopplung des Antriebsgehäuses 7 von dem Trägerelement 4 erreicht wird.

Ist das Antriebsgehäuse 7 unter Zwischenlage des Dichtelements 5 an das Trägerelement 4 angesetzt worden, so wird das Antriebsgehäuse 7 über das Befestigungselement 9 mit dem Seilausgangsgehäuse 2 verspannt, sodass darüber das Seilausgangsgehäuse 2 und das Antriebsgehäuse 7 zueinander und an dem Trägerelement 4 festgelegt werden. Wie aus Fig. 1A und 1B ersichtlich, wird das Befestigungselement 9 in die Eingriffsöffnung 721 innerhalb des Lagerelements 72 des Antriebsgehäuses 7 eingesetzt, sodass das Befestigungselement 9 mit einem Schaft 90 die Öffnung 720 am Kopf des Lagerelements 72 durchgreift und in die Öffnung 221 des Lagerelements 22 des Seilausgangsgehäuses 2 eingreift. Ein Kopf 91 des Befestigungselements 9 kommt hierbei an der dem Lagerelement 22 abgewandten Seite der Öffnung 720 zu liegen, sodass durch Einschrauben des Befestigungselements 9 in die Öffnung 221 innerhalb des Lagerelements 22 das Seilausgangsgehäuse 2 zu dem Antriebsgehäuse 7 verspannt wird. Das Lagerelement 22 des Seilausgangsgehäuses 2 und das Lagerelement 72 des Antriebsgehäuses 7 schaffen hierbei eine gemeinsame Drehachse D für die Seiltrommel 3 einerseits und das Antriebsrad 6 andererseits, sodass die Seiltrommel 3 und das Antriebsrad 6 sich im Betrieb koaxial zueinander und gemeinsam miteinander verdrehen können.

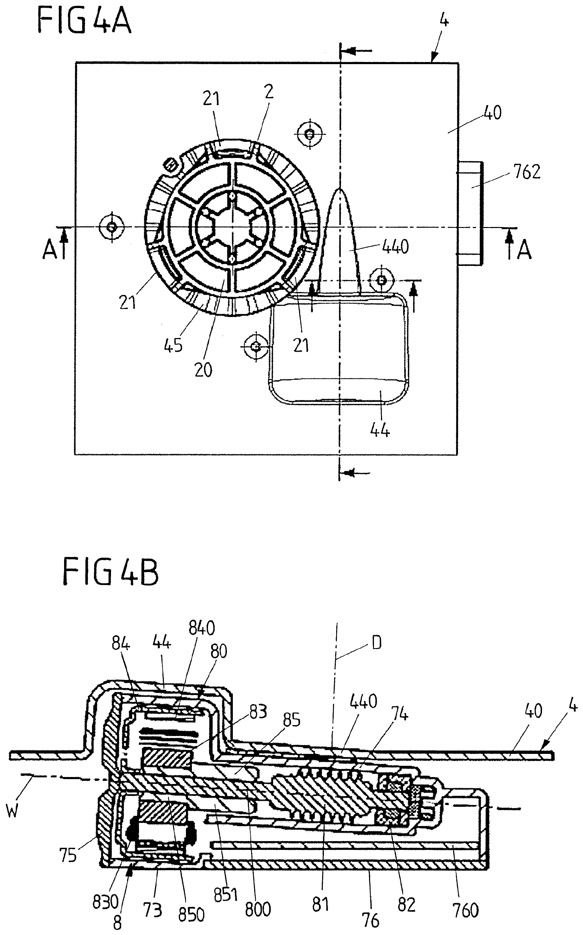

Bei dem Ausführungsbeispiel gemäß Fig. 1A, 1B bis 7A, 7B ist die Antriebswelle 800 des Elektromotors 80 um eine Wellenachse W drehbar relativ zu dem Antriebsgehäuse 7 gelagert. Wie aus der Schnittansicht gemäß Fig. 4B ersichtlich, ist der Elektromotor 80 hierbei durch einen Stator 83, der an Polzähnen eine Mehrzahl von Statorwicklungen 830 (schematisch angedeutet in Fig. 4B) trägt, und einen Rotor 84, der eine Magnetanordnung 840 mit einer Mehrzahl von Permanentmagnetpolen trägt, gebildet. Der Rotor 84 stellt einen Außenläufer dar und läuft radial außerhalb des Stators 83 um. Der Rotor 84 ist drehfest mit der Antriebswelle 800 verbunden, die in einem buchsenförmigen Lagerelement 85 drehbar zum Stator 83 gelagert ist.

Der Elektromotor 80 kann an seinem Stator 83 z.B. sechs, neun, zwölf, fünfzehn, achtzehn, einundzwanzig oder vierundzwanzig Polzähne mit daran angeordneten Statorwicklungen 830 aufweisen. Im Betrieb des Elektromotors 80 werden die Statorwicklungen 830 in elektronisch kommutierter Weise bestromt, sodass ein Drehfeld an dem Stator 83 umläuft. Das Drehfeld wirkt mit einem durch die Magnetanordnung 840 (mit z.B. vier, sechs, acht, zehn, zwölf, vierzehn oder sechszehn Magnetpolen) an dem Rotor 84 erzeugten Erregerfeld zur Erzeugung eines Drehmoments zusammen, sodass der Rotor 84 in eine Drehbewegung um den Stator 83 versetzt wird.

Wie aus der Schnittansicht gemäß Fig. 4B ersichtlich, ist die Wellenachse W schräg zur Drehachse D der Seiltrommel 3 und des Antriebsrads 6 erstreckt. Dies schafft einen zusätzlichen Freiheitsgrad in der Anordnung des Elektromotors 80 an dem Trägerelement 4, was zu einer kompakten Bauform der Antriebsvorrichtung 1 beitragen kann.

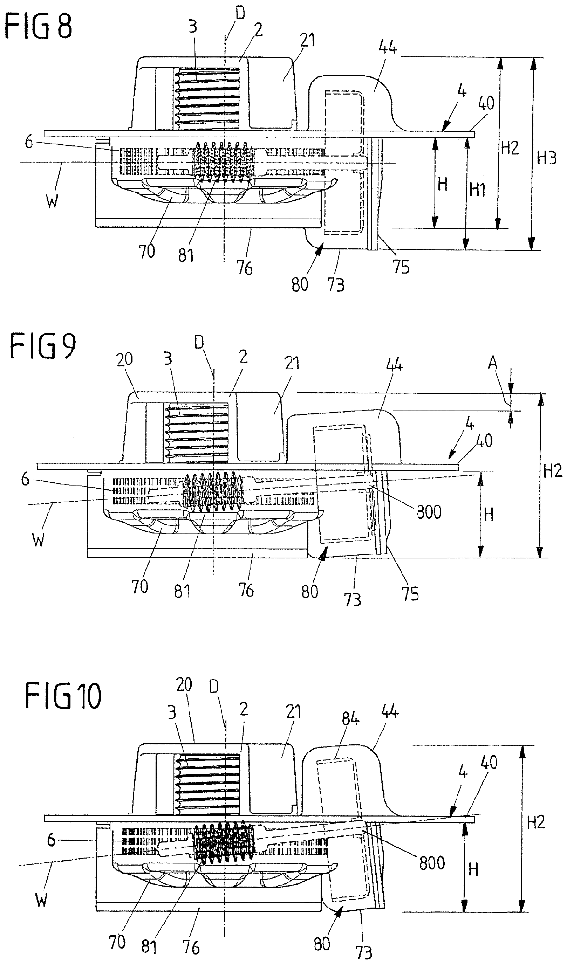

Dies soll anhand von Fig. 8-10 veranschaulicht werden.

Fig. 8 zeigt eine herkömmliche Anordnung, bei der die Wellenachse W quer zur Drehachse D erstreckt ist. Weil die Antriebsschnecke 81 auf der gleichen Höhe wie das Antriebsrad 6 anzuordnen ist, führt dies dazu, dass der in dem Motortopf 73 eingefasste Elektromotor 80 eine vergleichsweise große Höhe H1 an der zweiten Seite des Trägerelements 4 aufweist, die den Bauraum an der zweiten Seite des Trägerelements 4 bestimmt. Insbesondere ist die Höhe H1 des Motortopfs 73 größer als die Höhe H des Elektronikgehäuses 76. Es ergibt sich eine Gesamthöhe H3 der Antriebsvorrichtung 1 (gemessen über das Antriebsgehäuse 7 und das Seilausgangsgehäuse 2), die größer als die über das Elektronikgehäuse 76 und das Seilausgangsgehäuse 2 gemessene Höhe H2 ist.

Wird, wie in der dem Ausführungsbeispiel gemäß Fig. 1A, 1B bis 7A, 7B entsprechenden Variante gemäß Fig. 9, die Wellenachse W unter einem schrägen Winkel zur Drehachse D erstreckt, ermöglicht dies, den Elektromotor 80 derart in Richtung des Seilausgangsgehäuses 2 zu versetzen, dass der Motortopf 73 an der zweiten Seite des Trägerelements 4 nicht über das Elektronikgehäuse 76 hinausragt. Die Höhe des Motortopfs 73 an der zweiten Seite kann somit der Höhe H des Elektronikgehäuses 76 entsprechen, sodass der Motortopf 73 keinen zusätzlichen Bauraum (entlang der senkrecht zum Trägerelement 4 gerichteten Normalenrichtung) erforderlich macht. Es ergibt sich eine Gesamthöhe H2 der Antriebsvorrichtung 1, die (ausschließlich) durch die Höhe des Seilausgangsgehäuses 2 und des Elektronikgehäuses 76 bestimmt ist.

Bei der Variante gemäß Fig. 9 besteht ein Abstand A entlang der Normalenrichtung (senkrecht zum Trägerelement 4) zwischen der Oberkante der Ausformung 44, in der der Motortopf 73 einliegt, und der Oberkante des Bodens 20 des Seilausgangsgehäuses 2. Es besteht somit zusätzlicher Bauraum, der für eine Vergrößerung des Durchmessers des Elektromotors 80 ausgenutzt werden kann, wie dies in Fig. 10 veranschaulicht ist.

So kann der Durchmesser des Elektromotors 80, bestimmt durch den als Außenläufer ausgebildeten Rotor 84, derart vergrößert werden, dass die Oberkante der Ausformung 44 auf derselben Höhe wie die Oberseite des Bodens 20 liegt und somit die Gesamthöhe des für den Elektromotor 80 erforderlichen Bauraums (bestimmt durch die Höhe der Ausformung 44 an der ersten Seite des Trägerelements 4 und die Höhe H des Motortopfs 73 an der zweiten Seite des Trägerelements 4) der Gesamthöhe H2 des Seilausgangsgehäuses 2 und des Elektronikgehäuses 76 entspricht. Die Vergrößerung des Rotordurchmessers 84 ermöglicht hierbei, die axiale Länge (betrachtet entlang der Wellenachse W) des Elektromotors 80 und der Antriebswelle 800 zu verkleinern, sodass die Vergrößerung des Durchmessers bei gleichbleibendem Drehmoment eine Verkleinerung der axialen Länge des Elektromotors 80 möglich macht.

Der den Elektromotor 80 einfassende Motortopf 73 liegt in der Ausformung 44 an dem Trägerelement 4 ein. Dadurch, dass sich die Ausformung 44 in den Raum des Seilausgangsgehäuses 2 an der ersten Seite des Trägerelements 4 hinein erstreckt und dazu von dem Flächenelement 40 vorsteht, kann der Motortopf 73 - bildlich gesprochen und betrachtet von der dem Antriebsgehäuse 7 zugeordneten zweiten Seite des Trägerelements 4 aus betrachtet - in das Trägerelement 4 hinein versenkt werden. Zusammen mit der schrägen Ausrichtung der Wellenachse W und der Vergrößerung des Durchmessers des Elektromotors 80 ermöglicht dies eine besonders kompakte Bauform der Antriebsvorrichtung 1.

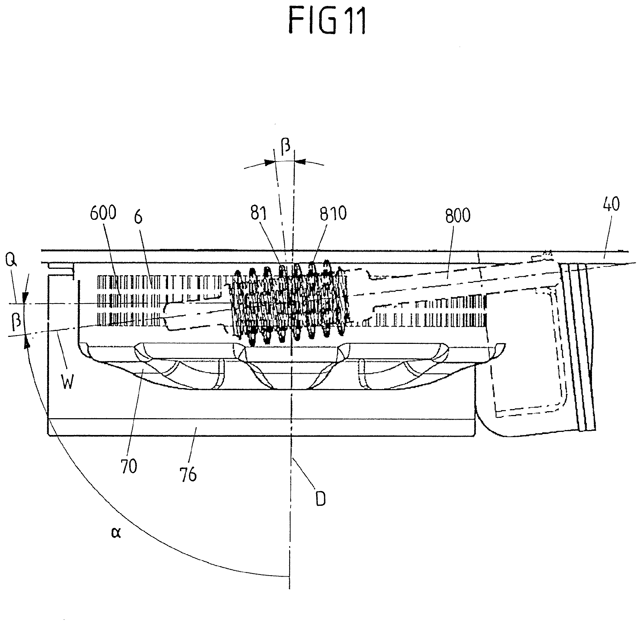

In einer besonders vorteilhaften Ausgestaltung kann die Schrägstellung der Wellenachse W relativ zur Drehachse D gerade so gewählt sein, dass der Steigungswinkel β der Schneckenverzahnung 810 der Antriebsschnecke 81 gerade dem Winkel entspricht, den die Wellenachse W zu einer quer zur Drehachse D weisenden Querachse Q beschreibt, wie dies in Fig. 11 dargestellt ist. Dies ermöglicht, die Außenverzahnung 600 des Antriebsrads 6 als Geradverzahnung (mit parallel zur Drehachse gerade erstreckten Zahnspitzen) auszubilden, was - im Vergleich zu einer herkömmlich üblichen Schrägverzahnung - eine einfache, kostengünstige Herstellung des Antriebsrads 6 möglich macht. Die Schrägstellung der Wellenachse W kann somit nicht nur vorteilhaft für den Bauraum sein, sondern kann gleichzeitig eine einfache, kostengünstige Herstellung des Antriebsrads 6 ermöglichen.

Wie aus Fig. 11 ersichtlich, beschreibt die Wellenachse W einen Winkel α relativ zur Drehachse D. Der Winkel β entspricht einem Betrag von 90° - α.

Die Antriebsschnecke 81 kann beispielsweise einstückig mit der Antriebswelle 800 geformt sein. Denkbar und möglich ist aber auch, die Antriebsschnecke 81 als zusätzliches, gesondertes Bauteil an der Antriebswelle 800 drehfest anzuordnen.

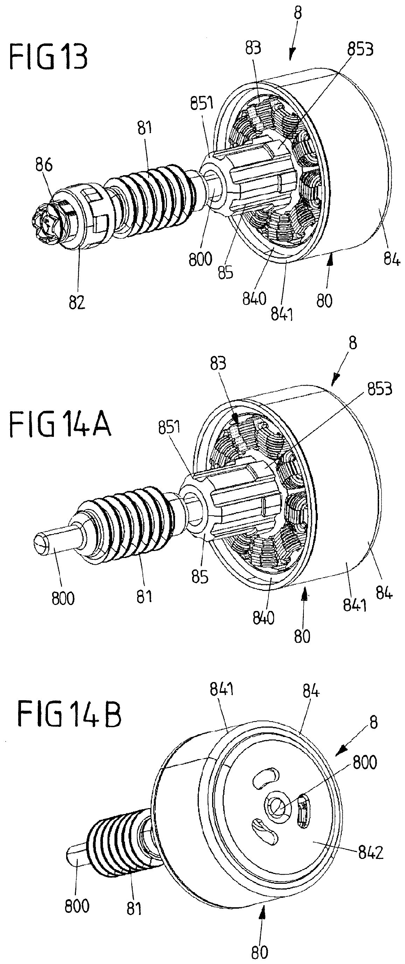

Fig. 13 bis 21 zeigen ein Ausführungsbeispiel eines Elektromotors 80 der Motoreinheit 8 zum Antreiben des in dem Gehäusetopf 70 eingefassten und an dem Lagerelement 72 drehbar gelagerten Antriebsrads 6.

Wie vorangehend schon beschrieben, weist der Elektromotor 80 einen Stator 83 und einen um den Stator 83 umlaufenden, als Außenläufer ausgebildeten Rotor 84 auf. Der Rotor 84 ist mit der Antriebswelle 800 verbunden, an der die Antriebsschnecke 81 zum Antreiben des Antriebsrads 6 angeordnet ist.

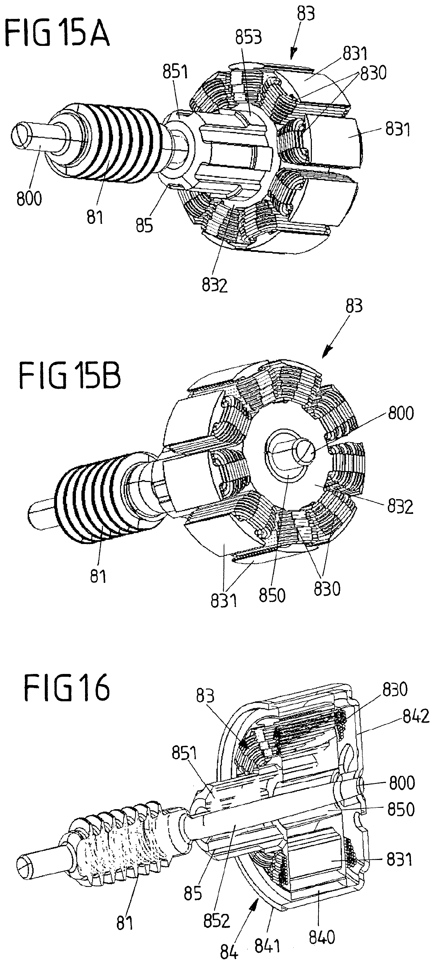

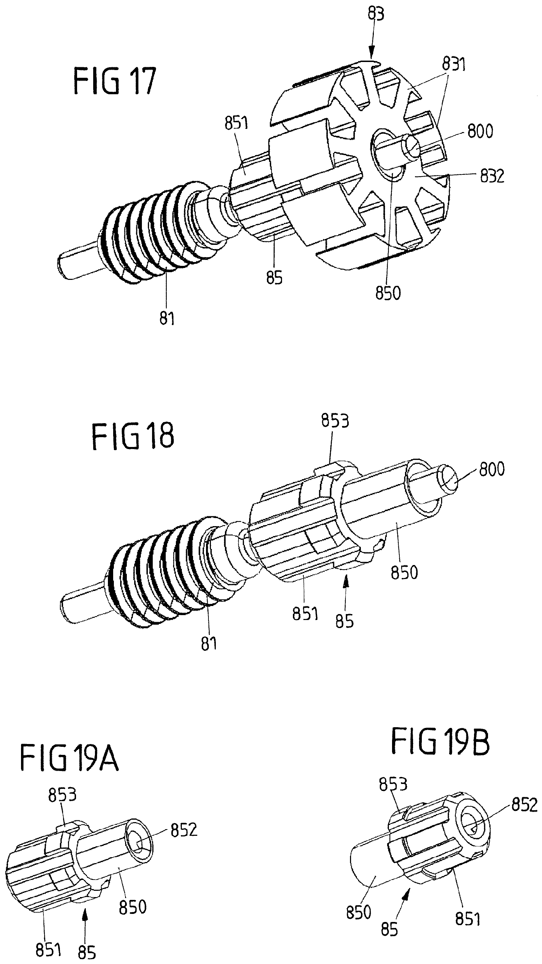

Wie aus Fig. 15A, 15B und 17 ersichtlich ist, weist der Stator 83 einen Statorkörper 832 auf, der beispielsweise als Blechpaket durch aneinander angesetzte Bleche gebildet ist und eine Mehrzahl von Polzähnen 831 (bei dem Ausführungsbeispiel neun Polzähne 831) ausbildet. An den Polzähnen 831 sind Statorwicklungen 830 angeordnet, die bei dem dargestellten Ausführungsbeispiel als konzentrierte Wicklungen ausgebildet sind. An jedem Polzahn 831 können hierbei ein oder mehrere Wicklungen angeordnet sein, die durch einen um den jeweils zugeordneten Polzahn 831 gewickelten Wickeldraht mit jeweils mehreren Windungen gefertigt sind.

Der Stator 83 ist über ein Lagerelement 85 fest mit dem Antriebsgehäuse 7 verbunden, indem das Lagerelement 85 mit einem ersten Schaftabschnitt 850 zentral in den Statorkörper 832 eingreift und mit einem axial zu dem ersten Schaftabschnitt 850 versetzten, zweiten Schaftabschnitt 851 in das Schneckengehäuse 74 (siehe zum Beispiel Fig. 4B) eingesteckt ist. Über das Lagerelement 85 ist der Stator 83 fest mit dem Antriebsgehäuse 7 verbunden, wobei die Schaftabschnitte 850, 851 beispielsweise durch Verpressen, Kleben, Schweißen oder auf sonstige Weise einerseits in dem Statorkörper 832 und andererseits in dem Schneckengehäuse 74 fixiert sind.

Das Lagerelement 85 weist, wie zum Beispiel aus einer Zusammenschau von Fig. 16 und Fig. 19A, 19B ersichtlich ist, eine zentrale Lageröffnung 852 auf, durch die hindurch die Antriebswelle 800 greift. Die Antriebswelle 800 ist somit in dem Lagerelement 85 drehbar gelagert, wobei die Antriebswelle 800 zusätzlich an ihrem von dem Stator 83 abgewandten Ende über ein Lagerelement 82 innerhalb des Schneckengehäuses 74 abgestützt ist (siehe zum Beispiel Fig. 4B).

Das Lagerelement 85 kann beispielsweise aus Kunststoff gefertigt sein und kann vorteilhafte Gleiteigenschaften zum Lagern der Antriebswelle 800 aufweisen.

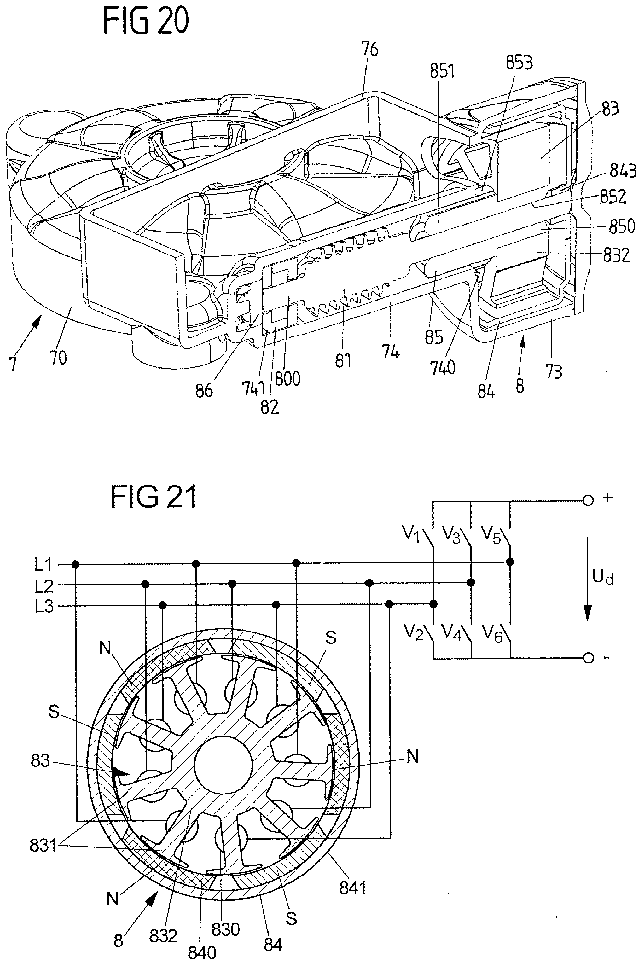

Der als Außenläufer ausgebildete Rotor 84 weist einen Poltopf 841 auf, der eine Magnetanordnung 840 mit einer Mehrzahl von umfänglich zueinander versetzten Magnetpolen N, S aufweist, wie dies schematisch in Fig. 21 dargestellt ist. Die Magnetanordnung 840 kann beispielsweise als Ringmagnet mit alternierend magnetisierten (gepolten) Abschnitten ausgebildet sein.

Bei dem dargestellten Ausführungsbeispiel weist die Magnetanordnung 840 sechs Magnetpole N, S, wie in Fig. 21 dargestellt, auf, die alternierend zueinander angeordnet sind.

Der Poltopf 841 ist über eine Stirnwand 842 mit einem der Antriebsschnecke 81 abgewandten Ende der Antriebswelle 800 verbunden, wie dies beispielsweise aus Fig. 16 und Fig. 14B ersichtlich ist. Die Stirnwand 842 weist hierzu einen Verbindungsbund 843 auf, in den die Antriebswelle 800 eingreift und über den die Antriebswelle 800 somit drehfest zu dem Poltopf 841 fixiert ist.

Der Poltopf 841 trägt an der dem Stator 83 zugewandten Innenseite der umfänglichen Mantelfläche die Magnetanordnung 840. Der Poltopf 841 ist vorzugsweise aus einem Material mit ferromagnetischen Eigenschaften, beispielsweise einem Metallmaterial, gefertigt und stellt vorteilhafterweise einen magnetischen Rückschluss für die Magnetanordnung 840 dar.

Weil der Rotor 84 außen um den Stator 83 umläuft und die Drehmomenterzeugung somit auf einem vergleichsweise großen Radius stattfindet, weist der Elektromotor 80 ein vorteilhaftes Drehmomentverhalten auf. Dies ermöglicht, die axiale Länge des Elektromotors 80 genauso wie der Antriebswelle 800 zu verkleinern und somit den Bauraum der Motoreinheit 8 in axialer Richtung zu verkleinern.

Angemerkt sei an dieser Stelle, dass der Elektromotor 80, wie vorangehend ausgeführt, auch eine andere Anzahl von Polzähnen 831 am Stator 83 und Magnetpolen N, S am Rotor 84 aufweisen kann.

Wie schematisch in Fig. 21 dargestellt, werden die Statorwicklungen 830 an den Polzähnen 831 des Rotors 83 im Betrieb der Antriebsvorrichtung 1 in elektronisch kommutierter Weise bestromt. Über elektronische Schalter V1-V6 wird hierbei alternierend ein positives oder negatives Potenzial an drei Phasenleitungen L1, L2, L3 angeschlossen derart, dass sich an den Statorwicklungen 830 ein umlaufendes Drehfeld ergibt, das mit dem durch die Magnetanordnung 840 an dem Rotor 84 erzeugten Erregerfeld zur Drehmomenterzeugung an dem Rotor 84 zusammenwirkt. Der Anschluss der Statorwicklungen 830 kann hierbei über das Lagerelement 85 erfolgen, über das Leitungen von z.B. dem Elektronikgehäuse 76 hin zu den Statorwicklungen 830 geführt sein können.

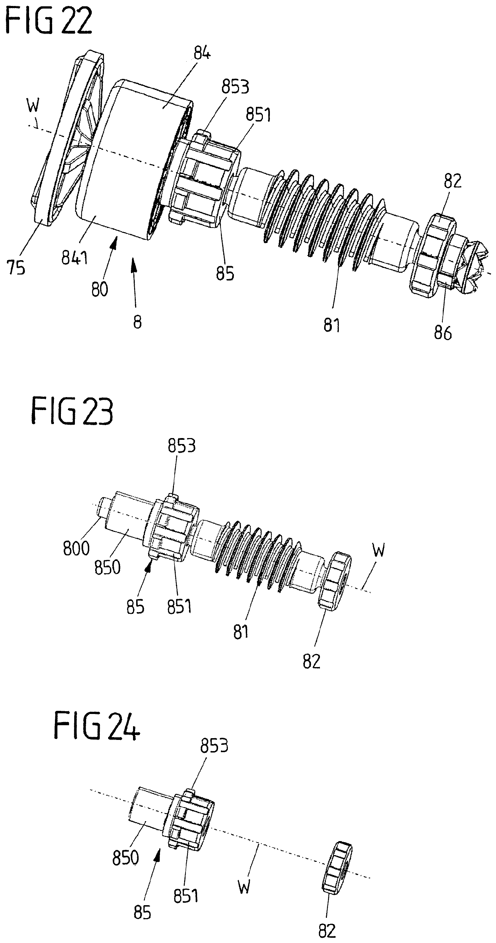

Fig. 22 bis 25 zeigen ein gegenüber dem Ausführungsbeispiel gemäß Fig. 13 bis 21 geringfügig modifiziertes Ausführungsbeispiel einer Motoreinheit 8, bei der ein Elektromotor 80 einen als Außenläufer ausgebildeten Rotor 84 aufweist, der radial außerhalb eines Stators 83 umläuft. Der Rotor 84 weist einen Poltopf 841 auf, der fest mit einer Antriebswelle 800 verbunden ist, sodass durch Verdrehen des Rotors 84 die Antriebswelle 800 in eine Drehbewegung versetzt wird und über eine an der Antriebswelle 800 angeordnete Antriebsschnecke 81 (die beispielsweise einstückig mit der Antriebswelle 800 ausgebildet ist) das Antriebsrad 6 antreibt.

Bei den Ausführungsbeispielen gemäß Fig. 13 bis 21 und gemäß Fig. 22 bis 25 ist die Antriebswelle 800 jeweils über zwei Lagerelemente 82, 85 gegenüber dem Antriebsgehäuse 7, nämlich gegenüber dem Schneckengehäuse 74, gelagert. Die Lagerelemente 82, 85 stellen hierbei eine drehbare Lagerung um die Wellenachse W für die Antriebswelle 800 zur Verfügung. Diese Wellenachse W entspricht der Rotationsachse des Rotors 84.

Das Lagerelement 85 dient, wie vorangehend anhand des Ausführungsbeispiels gemäß Fig. 13 bis 21 beschrieben, auch bei dem Ausführungsbeispiel gemäß Fig. 22 bis 25 in synergetischer Doppelfunktion dazu, den Stator 83 gegenüber dem Schneckengehäuse 74 festzulegen und zudem die Antriebswelle 800 zu lagern. Das Lagerelement 85 weist hierbei vorzugsweise an seinem in das Schneckengehäuse 74 eingreifenden Schaftabschnitt 851 den gleichen Außendurchmesser auf wie das weitere, zweite Lagerelement 82. Bei entlang der Länge des Schneckengehäuses 74 konstantem Innendurchmesser erfahren die Lagerelemente 82, 85 somit vergleichbare Toleranzen innerhalb des Schneckengehäuses 74.

Das den Stator 83 tragende, zweite Lagerelement 85 weist einen durch umfänglich zueinander versetzte, einzelne Vorsprünge ausgebildeten Anschlag 853 auf, der bei in das Schneckengehäuse 74 eingreifendem Lagerelement 85 mit einem Absatz 740 am Eingang des Schneckengehäuses 74 in Anlage ist, sodass über den Anschlag 853 die axiale Lage des Lagerelements 85 gegenüber dem Schneckengehäuse 74 festgelegt ist.

Das weitere, zweite Lagerelement 82 liegt demgegenüber innerhalb des Schneckengehäuses 74 an einem Absatz 741 an, der an einem Übergang zu einem Endabschnitt 742 des Schneckengehäuses 74 (mit einem gegenüber dem die Antriebsschnecke 81 aufnehmenden Abschnitt des Schneckengehäuses 74 verringerten Innendurchmesser) ausgebildet ist, sodass auch das weitere, zweite Lagerelement 82 axial innerhalb des Schneckengehäuses 74 abgestützt ist und somit eine definierte axiale Lage innerhalb des Schneckengehäuses 74 einnimmt.

Die Antriebswelle 800 ist an ihrem dem weiteren, zweiten Lagerelement 82 zugeordneten Ende über ein Anlaufelement 86, das in dem Endabschnitt 742 des Schneckengehäuses 74 einliegt, axial in dem Schneckengehäuse 74 abgestützt. Das Anlaufelement 86 stellt ein Axiallager für die Antriebsschnecke 800 zur Verfügung.

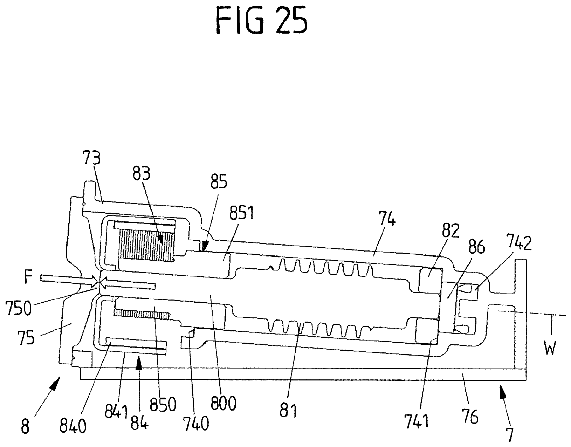

An ihrem anderen Ende ist die Antriebswelle 800 demgegenüber an dem mit dem Motortopf 73 verbundenen Deckel 75 des Antriebsgehäuses 7 axial abgestützt, wobei der Deckel 75 hierzu eine hin zur Antriebswelle 800 vorspringende Anlaufstelle 750 aufweist, die einen definierten Axialanlauf für die Antriebswelle 800 zur Verfügung stellt (siehe insbesondere Fig. 25). An dem Deckel 75 können somit Axialkräfte der Antriebswelle 800 aufgenommen werden, sodass durch die beidseitige axiale Abstützung der Antriebswelle 800 eine im Wesentlichen spielfreie Axiallagerung für die Antriebswelle 800 innerhalb des Schneckengehäuses 74 und des daran anschließenden Motortopfs 73 zur Verfügung gestellt werden kann.

Der Deckel 75 kann beispielsweise mit dem Motortopf 73 verschweißt sein, wobei das Verschweißen unter Verspannung des Deckels 75 gegenüber dem Motortopf 73 erfolgen kann, sodass bei der Montage eine Spielfreimachung der Antriebswelle 800 in dem Antriebsgehäuse 7 erfolgen kann.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen.

Eine Antriebsvorrichtung der beschriebenen Art ist insbesondere nicht beschränkt auf den Einsatz an einem Fensterheber, sondern kann auch zum Verstellen eines anderen Verstellelements, beispielsweise eines Schiebedachs oder dergleichen, in einem Fahrzeug dienen.

Die Antriebsvorrichtung kann in einfacher Weise insbesondere unter Verwendung eines (einzigen) axial verspannenden Befestigungselements montiert werden. Es ergibt sich eine Montage in wenigen Montageschritten, die einfach und günstig bei zuverlässiger Festlegung des Seilausgangsgehäuses und des Antriebsgehäuses an dem Trägerelement sein kann.

### Bezugszeichenliste

- 1: Antriebsvorrichtung
- 10: Seil
- 11: Führungsschiene
- 110, 111: Umlenkung
- 12: Mitnehmer
- 13: Fensterscheibe
- 2: Seilausgangsgehäuse
- 20: Boden
- 200, 201: Strukturelement (Versteifungsrippe)
- 202: Aussparung (Materialschwächung)
- 21: Gehäuseabschnitt
- 210: Fußabschnitt
- 211: Rastelement
- 212: Formschlussöffnung (Schlitzöffnung)
- 22: Lagerelement (Lagerdom)
- 220: Zentrierkonus
- 221: Öffnung
- 23: Sicherungselement
- 3: Seiltrommel
- 30: Körper
- 300: Seilrille
- 31: Hohlrad
- 310: Verzahnung
- 32: Auflageelement
- 4: Trägerelement (Aggregateträger)
- 40: Flächenabschnitt
- 41: Öffnung
- 42: Formschlusselement
- 420: Rastausnehmung
- 43: Formschlusselement
- 44: Ausformung
- 440: Ausformung
- 45: Anlagering
- 46: Auflagering
- 5: Dichtelement
- 50: Dichtring
- 51: Eingriffsabschnitt
- 52: Gekrümmter Abschnitt
- 6: Antriebsrad
- 60: Körper
- 600: Außenverzahnung
- 61: Verbindungsrad
- 610: Verzahnung
- 62: Öffnung
- 7: Antriebsgehäuse
- 70: Gehäusetopf
- 71: Befestigungseinrichtung (Eingriffsbuchse)
- 710: Formschlussöffnung
- 72: Lagerelement (Lagerdom)
- 720: Öffnung
- 721: Eingriffsöffnung
- 722: Zentriereingriff
- 73: Motortopf
- 74: Schneckengehäuse
- 740, 741: Absatz
- 742: Endabschnitt
- 75: Gehäusedeckel
- 750: Anlaufstelle
- 76: Elektronikgehäuse
- 760: Platine
- 761: Gehäuseplatte
- 762: Steckverbinder
- 8: Motoreinheit
- 80: Elektromotor
- 800: Antriebswelle
- 81: Antriebsschnecke
- 810: Schneckenverzahnung
- 82: Lager
- 820: Anschlag
- 83: Stator
- 830: Statorwicklungen
- 831: Polzähne
- 832: Statorkörper
- 84: Rotor
- 840: Magnetanordnung (Ringmagnet)
- 841: Poltopf
- 842: Stirnwand
- 843: Verbindungsbund
- 85: Lagerelement
- 850, 851: Schaftabschnitt
- 852: Lageröffnung
- 853: Anschlag
- 86: Anlaufelement
- 9: Befestigungselement
- 90: Schaft
- 91: Kopf
- α, β: Winkel
- A: Abstand
- D: Drehachse
- H, H1, H2: Höhe
- Q: Querachse
- V1-V6: Elektronische Schalter
- W: Wellenachse

## Patentansprüche

1. Antriebsvorrichtung (1) zum Verstellen eines Abdeckelements eines Fahrzeugs, insbesondere für eine Fensterhebereinrichtung, mit
- einem Abtriebselement zum Verstellen des Abdeckelements,
- einer Motoreinheit (8), die einen Elektromotor (80) mit einem Stator (83), einem Rotor (84) und einer mit dem Rotor (84) verbundenen, um eine Wellenachse (W) drehbaren Antriebswelle (800) zum Antreiben des Abtriebselements aufweist,
- einem Antriebsrad (6), das mit dem Abtriebselement wirkverbunden ist und mit der Antriebswelle (800) in Verzahnungseingriff steht,
- einer an der Antriebswelle (800) angeordneten Antriebsschnecke (81), die eine mit einer Verzahnung (600) des Antriebsrads (6) in Verzahnungseingriff stehende Schneckenverzahnung (810) aufweist, und
- einem Antriebsgehäuse (7), das die Motoreinheit (8) zumindest teilweise einfasst, und das ein Schneckengehäuse (74) aufweist, in dem die Antriebsschnecke (81) eingefasst ist,
wobei der Stator (83) über ein Lagerelement (85) mit einem feststehenden Gehäuseabschnitt des Antriebsgehäuses (7) verbunden ist, wobei das Lagerelement (85) eine Lageröffnung (852) aufweist, in der die Antriebswelle (800) drehbar zu dem Stator (83) gelagert ist
**dadurch gekennzeichnet, dass**
das Lagerelement (85) in das Schneckengehäuse (74) eingreift und fest mit dem Schneckengehäuse (74) verbunden ist, indem das Lagerelement (85) in das Schneckengehäuse (74) eingepresst und/oder mit dem Schneckengehäuse (74) verklebt oder verschweißt ist.

2. Antriebsvorrichtung (1) nach Anspruch 1, **dadurch gekennzeichnet, dass** das Lagerelement (85) einen ersten Schaftabschnitt (850), der fest mit einem Statorkörper (832) des Stators (83) verbunden ist, und einen axial zu dem ersten Schaftabschnitt (850) versetzten, zweiten Schaftabschnitt (851), der fest mit dem Gehäuseabschnitt verbunden ist, aufweist.

3. Antriebsvorrichtung (1) nach Anspruch 1 oder 2, **dadurch gekennzeichnet, dass** der Rotor (84) als radial zur Wellenachse (W) außerhalb des Stators (83) umlaufender Außenläufer ausgebildet ist.

4. Antriebsvorrichtung (1) nach einem Ansprüche 1 bis 3, **dadurch gekennzeichnet, dass** der Elektromotor (80) als bürstenloser Gleichstrommotor ausgebildet ist.

5. Antriebsvorrichtung (1) nach einem der vorangehenden Ansprüche, **dadurch gekennzeichnet, dass** der Stator (83) eine Mehrzahl von Polzähnen (831) aufweist, an denen eine Mehrzahl von Statorwicklungen (830) angeordnet ist.

6. Antriebsvorrichtung (1) nach einem der vorangehenden Ansprüche, **dadurch gekennzeichnet, dass** der Rotor (84) eine Magnetanordnung (840) mit einer Mehrzahl von Magnetpolen aufweist.

7. Antriebsvorrichtung (1) nach einem der vorangehenden Ansprüche, **dadurch gekennzeichnet, dass** der Rotor (84) einen Poltopf (841) aufweist, der mit der Antriebswelle (800) verbunden ist und die Magnetanordnung (840) trägt.

8. Antriebsvorrichtung (1) nach einem der vorangehenden Ansprüche, **dadurch gekennzeichnet, dass** der Rotor (84) auf einer von der Antriebsschnecke (81) abgewandten Seite des Stators (83) mit der Antriebswelle (800) verbunden ist.

9. Antriebsvorrichtung (1) nach einem der vorangehenden Ansprüche, **dadurch gekennzeichnet, dass** das Lagerelement (85) an einem ersten Absatz (740) des Schneckengehäuses (74() axial abgestützt ist.

10. Antriebsvorrichtung (1) nach einem der vorangehenden Ansprüche, **dadurch gekennzeichnet, dass** das Lagerelement (85) und ein axial zu dem Lagerelement (85) versetztes, weiteres Lagerelement (82) in dem Schneckengehäuse (74) angeordnet sind und die Antriebswelle (800) drehbar lagern.

11. Antriebsvorrichtung (1) nach Anspruch 10, **dadurch gekennzeichnet, dass** das weitere Lagerelement (82) an einem zweiten Absatz (741) des Schneckengehäuses (74) axial abgestützt ist.

12. Antriebsvorrichtung (1) nach einem der vorangehenden Ansprüche, **dadurch gekennzeichnet, dass** die Antriebswelle (800) an einem Ende über ein Anlaufelement (86) axial in dem Schneckengehäuse (74) abgestützt ist.

13. Antriebsvorrichtung (1) nach einem der vorangehenden Ansprüche, **dadurch gekennzeichnet, dass** der Rotor (84) und der Stator (83) in einem Motortopf (73) des Antriebsgehäuses (7) eingefasst sind, wobei die Antriebswelle (800) axial an einem Deckel (75) des Motortopfs (74) abgestützt ist.

14. Antriebsvorrichtung (1) nach einem der vorangehenden Ansprüche, **dadurch gekennzeichnet, dass** die Wellenachse (W) der Antriebswelle (800) unter einem schrägen Winkel (a) zu einer Drehachse (D), um die das Abtriebselement drehbar ist, ausgerichtet ist.

15. Antriebsvorrichtung (1) nach einem der vorangehenden Ansprüche, **dadurch gekennzeichnet, dass** das Abtriebselement eine um eine Drehachse (D) drehbare Seiltrommel (3) zum Verstellen eines mit dem Abdeckelement wirkverbundenen Zugelements (10) ist, die an einer ersten Seite eines Trägerelements (4) angeordnet ist, wobei das Antriebsgehäuse (7) auf einer von der ersten Seite abgewandten, zweiten Seite des Trägerelements (4) angeordnet ist.

## Claims

1. Drive device (1) for adjusting a cover element of a vehicle, in particular for a window regulator device, with
- an output element for adjusting the cover element,
- a motor unit (8), comprising an electric motor (80) with a stator (83), a rotor (84) and an drive shaft (800) connected to the rotor (84) and rotatable about a shaft axis (W) for driving the output element,
- a drive wheel (6), which is operatively connected to the output element and is in toothed engagement with the drive shaft (800),
- a drive worm (81) arranged on the drive shaft (800) and having a worm toothing (810) in toothed engagement with a toothing (600) of the drive wheel (6), and
- a drive housing (7), which at least partially encloses the motor unit (8) and which comprises a worm housing (74), in which the drive worm (81) is enclosed, wherein the stator (83) is connected to a stationary housing section of the drive housing (7) via a bearing element (85), wherein the bearing element (85) comprises a bearing opening (852), in which the drive shaft (800) is rotatably mounted relative to the stator (83)
**characterised in that**
the bearing element (85) engages in the worm housing (74) and is fixedly connected to said worm housing (74) by the bearing element (85) being pressed into the worm housing (74) and/or being glued or welded to the worm housing (74).

2. Drive device (1) according to claim 1, **characterized in that** the bearing element (85) comprises a first shaft section (850), which is fixedly connected to a stator body (832) of the stator (83), and a second shaft section (851), which is axially offset relative to the first shaft section (850) and is fixedly connected to the housing section.

3. Drive device (1) according to claim 1 or 2, **characterised in that** the rotor (84) is configured as an external rotor rotating radially to the shaft axis (W) outside the stator (83).

4. Drive device (1) according to claim 1 to 3, **characterized in that** the electric motor (80) is designed as a brushless DC motor.

5. Drive device (1) according to one of the preceding claims, **characterized in that** the stator (83) comprises a plurality of pole teeth (831), on which a plurality of stator windings (830) are arranged.

6. Drive device (1) according to one of the preceding claims, **characterized in that** the rotor (84) comprises a magnet arrangement (840) with a plurality of magnet poles.

7. Drive device (1) according to one of the preceding claims, **characterized in that** the rotor (84) comprises a pole pot (841), which is connected to the drive shaft (800) and supports the magnet arrangement (840).

8. Drive device (1) according to one of the preceding claims, **characterised in that** the rotor (84) is connected to the drive shaft (800) on a side of the stator (83) facing away from the drive worm (81).

9. Drive device (1) according to one of the preceding claims, **characterised in that** the bearing element (85) is axially supported on a first shoulder (740) of the worm housing (74).

10. Drive device (1) according to one of the preceding claims, **characterized in that** the bearing element (85) and a further bearing element (82) axially offset relative to the bearing element (85) are arranged in the worm housing (74) and rotatably support the drive shaft (800).

11. Drive device (1) according to claim 10, **characterised in that** the further bearing element (82) is axially supported on a second shoulder (741) of the worm housing (74).

12. Drive device (1) according to one of the preceding claims, **characterised in that** the drive shaft (800) at one end is axially supported in the worm housing (74) via a thrust element (86).

13. Drive device (1) according to one of the preceding claims, **characterized in that** the rotor (84) and the stator (83) are enclosed in a motor pot (73) of the drive housing (7), wherein the drive shaft (800) is axially supported on a cover (75) of the motor pot (74).

14. Drive device (1) according to one of the preceding claims, **characterized in that** the shaft axis (W) of the drive shaft (800) is aligned at an oblique angle (a) to an axis of rotation (D), about which the output element is rotatable.

15. Drive device (1) according to one of the preceding claims, **characterised in that** the output element is a cable drum (3) rotatable about an axis of rotation (D) for adjusting a pulling element (10) operatively connected to the cover element, which is arranged on a first side of a carrier element (4), wherein the drive housing (7) is arranged on a second side of the carrier element (4) facing away from the first side.

## Revendications

1. Dispositif d'entraînement (1) pour le réglage d'un élément de recouvrement d'un véhicule, en particulier pour dispositif de lève-vitre, avec
- un élément de sortie permettant de régler l'élément de recouvrement,
- un ensemble moteur (8) comprenant un moteur électrique (80) avec un stator (83), un rotor (84) et un arbre d'entraînement (800) relié au rotor (84) et pouvant tourner autour d'un axe d'arbre (W) pour entraîner l'élément de sortie,
- une roue d'entraînement (6), qui est reliée de manière opérationnelle à l'élément de sortie et qui est en prise dentée avec l'arbre d'entraînement (800),
- une vis sans fin d'entraînement (81) disposée sur l'arbre d'entraînement (800) et comportant une denture de vis sans fin (810) en prise avec une denture (600) de la roue d'entraînement (6), et
- un carter d'entraînement (7), qui entoure au moins partiellement l'ensemble moteur (8) et qui comprend un carter de vis sans fin (74), dans lequel est enfermée la vis sans fin d'entraînement (81),
dans lequel le stator (83) est relié à une partie fixe du carter d'entraînement (7) par l'intermédiaire d'un élément de palier (85), l'élément de palier (85) comportant une ouverture de palier (852) dans laquelle l'arbre d'entraînement (800) est monté rotatif par rapport au stator (83)
**caractérisé en ce que**
l'élément de palier (85) s'engage dans le carter de la vis sans fin (74) et est relié de manière fixe audit carter de la vis sans fin (74) par le fait que l'élément de palier (85) est pressé dans le carter de la vis sans fin (74) et/ou est collé ou soudé au carter de la vis sans fin (74).

2. Dispositif d'entraînement (1) selon la revendication 1, **caractérisé en ce que** l'élément de palier (85) comprend une première partie d'arbre (850), qui est reliée de manière fixe à un corps de stator (832) du stator (83), et une deuxième partie d'arbre (851) qui est décalée axialement par rapport à la première partie d'arbre (850) et est reliée de manière fixe à la partie de carter.

3. Dispositif d'entraînement (1) selon la revendication 1 ou 2, **caractérisé en ce que** le rotor (84) est construit comme un rotor externe tournant radialement par rapport à l'axe de l'arbre (W) à l'extérieur du stator (83).

4. Dispositif d'entraînement (1) selon les revendications 1 à 3, **caractérisé en ce que** le moteur électrique (80) est conçu comme un moteur à courant continu sans balais.

5. Dispositif d'entraînement (1) selon l'une des revendications précédentes, **caractérisé en ce que** le stator (83) comprend une pluralité de dents polaires (831) sur lesquelles est disposée une pluralité d'enroulements statoriques (830).

6. Dispositif d'entraînement (1) selon l'une des revendications précédentes, **caractérisé en ce que** le rotor (84) comprend un ensemble magnétique (840) avec une pluralité de pôles magnétiques.

7. Dispositif d'entraînement (1) selon l'une des revendications précédentes, **caractérisé en ce que** le rotor (84) comprend un pot polaire (841), qui est relié à l'arbre d'entraînement (800) et qui supporte l'ensemble magnétique (840).

8. Dispositif d'entraînement (1) selon l'une des revendications précédentes, **caractérisé en ce que** le rotor (84) est relié à l'arbre d'entraînement (800) sur un côté du stator (83) opposé à la vis sans fin d'entraînement (81).

9. Dispositif d'entraînement (1) selon l'une des revendications précédentes, **caractérisé en ce que** l'élément de palier (85) s'appuie axialement sur un premier épaulement (740) du logement de la vis sans fin (74).

10. Dispositif d'entraînement (1) selon la revendication 10, **caractérisé en ce que** l'autre élément de palier (82) est supporté axialement sur un deuxième épaulement (741) du logement de la vis sans fin (74).

11. Dispositif d'entraînement (1) selon la revendication 10, **caractérisé en ce que** l'autre élément de palier (82) est supporté axialement sur un deuxième épaulement (741) du logement de la vis sans fin (74).

12. Dispositif d'entraînement (1) selon l'une des revendications précédentes, **caractérisé en ce que** l'arbre d'entraînement (800) à une extrémité est supporté axialement dans le carter de la vis sans fin (74) par un élément de poussée (86).

13. Dispositif d'entraînement (1) selon l'une des revendications précédentes, **caractérisé en ce que** le rotor (84) et le stator (83) sont enfermés dans un pot de moteur (73) du carter d'entraînement (7), l'arbre d'entraînement (800) étant supporté axialement sur un couvercle (75) du pot de moteur (74).

14. Dispositif d'entraînement (1) selon l'une des revendications précédentes, **caractérisé en ce que** l'axe (W) de l'arbre d'entraînement (800) est orienté selon un angle oblique (a) par rapport à un axe de rotation (D) autour duquel l'élément de sortie peut tourner.

15. Dispositif d'entraînement (1) selon l'une des revendications précédentes, **caractérisé en ce que** l'élément de sortie est un tambour à câble (3) pouvant tourner autour d'un axe de rotation (D) pour le réglage d'un élément de traction (10) en liaison active avec l'élément de recouvrement, qui est disposé sur un premier côté d'un élément porteur (4), le carter d'entraînement (7) étant disposé sur un deuxième côté de l'élément porteur (4) opposé au premier côté.
